Europäisches Patentamt

**European Patent Office**

Office européen des brevets

(19)

(11) Numéro de publication: **0 076 196**
**B1**

(12) **FASCICULE DE BREVET EUROPEEN**

(45) Date de publication du fascicule du brevet:
**23.04.86**

(51) Int. Cl.⁴: **G 06 F 13/18**

(21) Numéro de dépôt: **82401691.9**

(22) Date de dépôt: **17.09.82**

(54) **Système d'arbitrage des demandes d'accès de plusieurs processeurs à des ressources communes, par l'intermédiaire d'un bus commun.**

(30) Priorité: **24.09.81 FR 8118014**

(43) Date de publication de la demande:
**06.04.83 Bulletin 83/14**

(45) Mention de la délivrance du brevet:
**23.04.86 Bulletin 86/17**

(84) Etats contractants désignés:
**CH DE GB IT LI NL SE**

(56) Documents cités:
**EP - A - 0 032 864**
**US - A - 3 798 591**

**IEEE TRANSACTIONS ON COMPUTERS, vol. C-21, no. 1, janvier 1972, pages 37-42, New York (USA); W.W. PLUMMER: "Asynchronous Arbiters"**
**DIGEST OF PAPERS, FTCS-10, The 10th International Symposium on Fault-Tolerant Computing, Kyoto, Japan, 1-3 octobre 1980, The Institute of Electrical and Electronics Engineers Inc., pages 281-283, (JP) M. COURVOISIER et al.: "A self-testing arbiter circuit for multimicrocomputer systems"**
**ELECTRONIC DESIGN, vol. 11, 24 mai 1979, pages 128-133, Rochelle Park (USA); DURHAM: "Fast LSI arbiters supervise priorities for bus-access in multiprocessor systems"**
**COMPUTER DESIGN, vol. 19, no. 6, juin 1980, pages 103-109, Concord (USA), NADIR et al.: "Bus arbiter streamlines multiprocessor design"**
**Fall Joint Computer Conference 1972, pages 719-740**

(73) Titulaire: **Finger, Ulrich, 30, rue du Moulin de Pierre, F-92140 Clamart (FR)**
Titulaire: **Desprez, Pierre, 50 Avenue A. Briand, F-92220 Bagneux (FR)**
Titulaire: **Ligneres, Pierre, 80 bis, rue des Mûres, F-92160 Antony (FR)**

(72) Inventeur: **Finger, Ulrich, 30, rue du Moulin de Pierre, F-92140 Clamart (FR)**
Inventeur: **Desprez, Pierre, 50 Avenue A. Briand, F-92220 Bagneux (FR)**
Inventeur: **Ligneres, Pierre, 80 bis, rue des Mûres, F-92160 Antony (FR)**

(74) Mandataire: **Mongrédien, André et al, c/o BREVATOME 25, rue de Ponthieu, F-75008 Paris (FR)**

## Description

La présente invention concerne un système d'arbitrage de l'accès de plusieurs processeurs ou microprocesseurs à un bus commun. Cette invention s'applique notamment à la gestion des accès de plusieurs processeurs ou microprocesseurs à des ressources communes, telles que des mémoires par exemple.

Dans le domaine des processeurs, un problème important que les techniciens solutionnent avec plus ou moins de bonheur, est celui de l'accès de plusieurs processeurs à des ressources communes, par l'intermédiaire d'un bus commun. Ce problème présente une importance accrue depuis l'apparition des microprocesseurs puisque, compte tenu de la puissance relativement importante de ces microprocesseurs, de leur coût et de leur encombrement peu élevés, il devient de plus en plus intéressant de concevoir des systèmes multiprocesseurs et de faire accéder ces processeurs à des ressources communes, par l'intermédiaire d'un bus commun.

On sait que ce type d'accès nécessite un arbitrage en fonction de critères de priorité des demandes d'accès faites par les processeurs. Il est aussi connu de faire fonctionner un système multiprocesseur, soit de façon synchrone, soit de façon asynchrone.

Dans un système multiprocesseur fonctionnant de façon synchrone, tous les processeurs sont pilotés par la même horloge. Dans ce type de système, la longueur des bus qui permettent d'accéder à des ressources communes, par l'intermédiaire d'un bus commun, est un paramètre important puisque les différents multiprocesseurs doivent fonctionner de manière synchrone et que la longueur des bus agit sur le synchronisme. Une autre difficulté que présente la conception d'un système multiprocesseur à horloge commune réside dans les retards de phase de l'horloge commune au cours des trajets des impulsions de cette horloge dans les différents bus et circuits. Enfin, le principal inconvénient de ces systèmes synchrones résulte du fait que la disponibilité du système est étroitement liée au cycle de l'horloge commune.

Dans les systèmes multiprocesseurs où les processeurs fonctionnent de manière asynchrone, ceux-ci ne se synchronisent que lors des accès aux ressources communes. Dans un système asynchrone, il est possible d'ajouter un processeur au système existant, sans avoir à modifier les algorithmes qui commandent l'arbitrage des demandes d'accès des différents processeurs à un bus commun. Il en résulte que les systèmes multiprocesseurs asynchrones présentent des avantages importants par rapport aux systèmes synchrones.

En dehors du fait que les systèmes multiprocesseurs peuvent fonctionner soit de manière synchrone, soit de manière asynchrone, une autre différence essentielle entre ces différents systèmes réside dans les systèmes d'arbitrage des demandes d'accès de différents processeurs à des ressources communes, par l'intermédiaire d'un bus commun. Parmi les différents systèmes d'arbitrage qui peuvent être utilisés, il faut distinguer les systèmes d'arbitrage «série» et les systèmes d'arbitrage «parallèle»:

– dans les systèmes d'arbitrage «série», chaque processeur comprend un circuit d'arbitrage ou arbitre dont la sortie est reliée à l'entrée de l'arbitre de priorité immédiatement inférieure. Il en résulte que les différents arbitres sont reliés en chaîne et que ces systèmes nécessitent l'utilisation d'une horloge qui gère les demandes d'accès des différents processeurs à un bus commun et qui gère également la sortie des résultats des traitements effectués par les différents processeurs. Il en résulte que le nombre des processeurs que l'on peut grouper en utilisant des systèmes d'arbitrage «série» dépend de la fréquence de l'horloge commun et des temps de retard introduits dans le système multiprocesseur par les traitements de priorité effectués par les systèmes d'arbitrage. Dans l'état actuel de la technique, une horloge qui fournit des impulsions à une fréquence de 10 MHz ne peut commander des systèmes d'arbitrage que dans un système à trois processeurs. De plus, dans ce type d'arbitrage, la priorité dépend de la position de chaque système d'arbitrage dans la chaîne de processeurs et il en résulte que le processeur qui est situé en bout de chaîne ne travaille pas dans des conditions très favorables.

– les systèmes d'arbitrage «parallèle» permettent de relier un plus grand nombre de processeurs à un bus commun, pour accéder à des ressources communes. Dans ces systèmes, chaque processeur possède une ligne de requête ou de demande d'accès au bus et une ligne qui permet de fournir le résultat de l'arbitrage. Souvent, d'autres lignes de commande viennent s'ajouter aux lignes précitées pour donner notamment l'état du système d'arbitrage (occupé, urgent).

Enfin, dans les systèmes multiprocesseurs, les priorités peuvent être traitées de différentes façons: ces priorités peuvent être fixes, rotatives ou peuvent également être à la fois fixes et rotatives.

Les systèmes d'arbitrage eux-mêmes peuvent être centralisés ou décentralisés. Un système d'arbitrage centralisé est attaché à un groupe de processeurs tandis qu'un système d'arbitrage décentralisé est attaché à chaque processeur. Un système centralisé nécessite moins de circuits qu'un système décentralisé, mais sa disponibilité détermine la disponibilité du système multiprocesseur.

Il semble qu'actuellement, le choix de l'organisation d'un système multiprocesseur, s'oriente vers les systèmes d'arbitrage parallèles, à priorité fixe, pour des raisons de rapidité, tandis que ce choix s'oriente vers les systèmes d'arbitrage à priorité série, pour des raisons de simplicité.

Enfin, des systèmes d'arbitrage de demandes d'accès à un bus commun, dans une structure multiprocesseurs, utilisent à la fois un arbitrage série et un arbitrage parallèle.

D'une manière générale, les systèmes d'arbitrage qui viennent d'être décrits, présentent les inconvénients suivants:

Le système d'arbitrage série nécessite l'utilisation d'une horloge très rapide pour permettre la connexion de plusieurs processeurs et ceci conduit à la mise au point de composants à commutation très rapide permettant de transmettre sur un bus, des signaux dont la fréquence est supérieure à 10 MHz. De plus, la priorité fixe de ces systèmes entraîne des contraintes de programmation de différents processeurs, de sorte que le processeur de priorité le plus faible risque de ne jamais accéder au bus.

Enfin, dans certains systèmes multiprocesseurs, les données sont transférées par bloc; l'accès d'un processeur à un bus commun nécessite dans ce cas, le temps de plusieurs échanges avec la mémoire, de sorte que pour accéder à un mot mémoire, ces systèmes sont très coûteux.

Les systèmes d'arbitrage parallèle sont dans la plupart des cas centralisés et il en résulte qu'ils présentent une faible disponibilité; dans ce cas, la priorité est souvent fixe pour diminuer la complexité du système d'arbitrage.

D'une manière générale, tous les arbitres connus travaillent avec une horloge qui permet d'éviter les conflits. La présence de cette horloge nécessite un temps supplémentaire de synchronisation des différentes processeurs sur celle-ci (ce temps dépendant de la fréquence de l'horloge). De plus, les différents processeurs sont dépendants de l'horloge pour tout problème de disponibilité.

Des systèmes d'arbitrages tel que ceux mentionnés plus haut sont décrits dans les documents suivants:

– EP-A-32 864,
– Computer Design, volume 19, numéro 6, juin 1980, pages 103–109,
– Fall Joint Computer Conference, 1972, pages 719–740,
– Digest of Papers, FTCS-10, octobre 1–3, 1980, pages 281 à 283.
– IEEE Transaction on Computers, volume C-21, numéro 1, janvier 1972, pages 37 à 42,
– Electronic Design, volume 11, 24 mai 1979, pages 128 à 133.

Les deux derniers documents mentionnés ci-dessus décrivent des arbitres qui permettent de réaliser un arbitrage mixte (mélange de priorités fixes et rotatives), mais qui ne sont pas facilement adaptables à un système d'arbitrage selon le préambule de la revendication 1.

L'invention telle qu'elle est caractérisée a pour but de remédier à ces inconvénients et notamment de réaliser un système d'arbitrage des demandes d'accès de plusieurs processeurs ou microprocesseurs à des ressources communes, par l'intermédiaire d'un bus commun. Ce système permet de gérer l'arbitrage des demandes d'accès à un bus commun dans un système multiprocesseur asynchrone, afin d'éviter les inconvénients des systèmes synchrones, mentionnés plus haut. Dans le système de l'invention, l'arbitrage des demandes d'accès est parallèle, avec possibilité de priorité fixe, rotative ou mixte; l'arbitrage est décentralisé pour donner plus de souplesse au système qui permet alors de satisfaire des demandes d'accès provenant d'un nombre important de processeurs ou microprocesseurs dans un délai très court (voisin de 100 nanosecondes). Cet arbitrage est asynchrone, sans horloge commune, indépendant du type de microprocesseur raccordé au bus.

Les combinaisons de priorités sont obtenues par des circuits de codage et de brassage, qui comme on le verra plus loin, permettent la fabrication du système sous forme de circuit intégré dans un boîtier standard. Ce système comprend en outre un ensemble de supervision qui permet de commuter un système d'arbitrage sur un autre en cas de défaillance de l'un deux. Ce système très simple permet en outre un fonctionnement à priorité rotative, sans qu'il soit nécessaire de faire appel à des files d'attente de type FIFO par exemple.

L'invention a pour objet un système d'arbitrage de demandes d'accès de plusieurs processeurs à des ressources communes, par l'intermédiaire d'un bus commun, comprenant pour chaque processeur un ensemble d'arbitrage des conflits des demandes d'accès, cet ensemble d'arbitrage comprenant des moyens de traitement des demandes d'accès reliés au bus et au processeur et un circuit de résolution des priorités d'accès, relié au bus, aux moyens de traitement des demandes d'accès, et au processeur, ce circuit de résolution étant capable d'attribuer aux demandes d'accès des priorités fixes, rotatives, ou des priorités à la fois fixes et rotatives, les moyens de traitement des demandes d'accès comprenant un circuit de requête d'accès au bus recevant un signal indiquant une demande d'accès du processeur correspondant à l'ensemble d'arbitrage considéré, ainsi qu'un signal indiquant si d'autres processeurs ont effectué une demande d'accès, et un circuit de transmission d'un signal représentatif du verdict d'arbitrage de la demande d'accès du processeur correspondant, en fonction des priorités des autres demandes d'accès, ces circuits de requête et de transmission de verdict étant reliés au bus, au processeur et au circuit de résolution de priorités, le circuit de transmission de verdict d'arbitrage comprenant des moyens pour reconnaître si l'ensemble d'arbitrage désigné pour être maître du bus correspond à un processeur qui fournit un signal de demande d'accès et pour fournir à ce processeur un signal indiquant l'acceptation de cette demande, chaque ensemble d'arbitrage comprenant en outre un interface reliant le processeur et le circuit de transmission de verdict d'arbitrage avec le bus. L'invention est caractérisée en ce que le circuit de résolution de priorités de chaque ensemble d'arbitrage comprend en outre un ensemble de résolution de priorités qui comporte un encodeur à priorité fixe pour coder les demandes d'accès des ensembles d'arbitrage qui fonctionnent en priorité fixe et un encodeur à priorité rotative pour coder les priorités des ensembles d'arbitrage fonctionnant en priorité rotative, cet encodeur à priorité rotative comprenant au moins un encodeur à priorité fixe précédé d'un réseau de brassage circulaire des demandes d'accès et suivi d'un additionneur de la valeur +1 et du numéro du processeur qui demande accès au bus, les entrées de l'encodeur à priorité fixe et de l'encodeur à priorité rotative étant reliées aux sorties d'un circuit logique pour aiguiller respectivement vers les encodeurs à priorité fixe et rotative, les demandes des ensembles d'arbitrage qui fonctionnent en priorité fixe et les demandes des ensembles d'arbitrage qui fonctionnent en priorité rotative, chaque circuit de résolution de priorité comprenant des moyens pour appliquer aux circuits de résolution de priorités des autres ensembles d'arbitrage, des signaux désignant l'ensemble d'arbitrage qui sera actif pour la prochaine demande d'accès au bus.

Selon un mode de réalisation particulier, le système d'arbitrage comprend en outre des moyens de supervision reliés aux circuits de résolution de priorité par l'intermédiaire du bus, pour appliquer à ces circuits un signal de commande de changement d'ensemble d'arbitrage si un verdict d'arbitrage n'est pas rendu dans un délai prédéterminé.

Selon un autre mode de réalisation particulier, les moyens de supervision sont constitués par des moyens de temporisation dont l'entrée est reliée au bus pour recevoir les signaux indiquant que d'autres processeurs ont effectué des demandes d'accès, une sortie de ces moyens de temporisation fournissant le signal de changement d'ensemble d'arbitrage aux circuits de résolution de priorité si un verdict d'arbitrage n'est pas rendu dans un délai prédéterminé.

Chaque ensemble d'arbitrage comprend en outre un interface reliant le processeur et le circuit de transmission de verdict d'arbitrage avec le bus.

Une solution alternative utilisant une mémoire PROM pour enregistrer et gérer les priorités des ensembles d'arbitrage fait l'objet de la demande divisionaire 85 200 875.4.

– La figure 1 est un schéma par bloc d'un système multiprocesseurs dans lequel intervient un ensemble d'arbitrage conforme à l'invention,
– la figure 2 représentée est un schéma par blocs d'un ensemble d'arbitrage relié à l'un des processeurs dans le système de l'invention,
– la figure 3 est un schéma des moyens de supervision du système de l'invention,
– la figure 4 est un schéma détaillé de l'ensemble d'arbitrage du système de l'invention,
– la figure 5 est un chronogramme des principaux signaux qui interviennent dans le système de l'invention,

– la figure 6 est un schéma détaillé du circuit de résolution de priorités permettant de gérer et de coder les numéros des processeurs qui demandent à accéder au bus, selon une priorité fixe, une priorité rotative ou une combinaison de ces deux types de priorités.
– la figure 7 est la représentation détaillée d'un réseau de brassage circulaire qui intervient dans le circuit de la figure 6 et qui entre dans la réalisation d'un encodeur à priorité rotative.

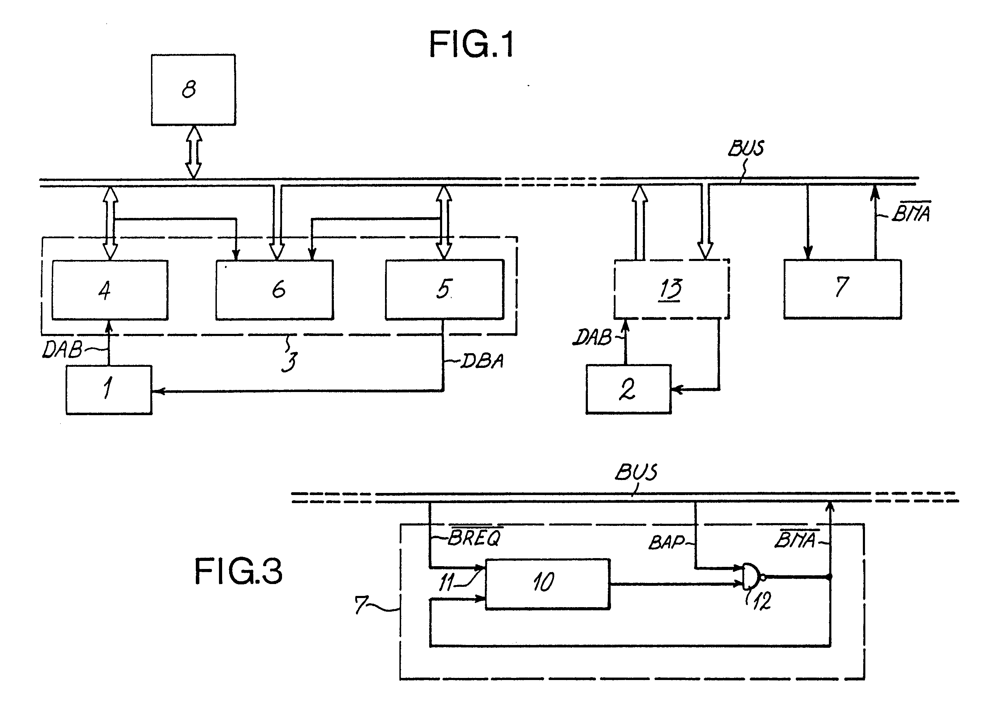

La figure 1 est un schéma par bloc du système de l'invention. Ce système permet d'arbitrer les demandes ou requêtes d'accès DAB de plusieurs processeurs 1, 2, à des ressources communes 8, par l'intermédiaire d'un bus commun de communication BUS. Bien entendu, le nombre des processeurs ou microprocesseurs a été limité à 2 dans l'exemple de réalisation représenté sur la figure, mais ce nombre peut évidemment être plus important. Les ressources communes 8 peuvent être par exemple des mémoires. Ce système comprend des ensembles d'arbitrage 3, 13, des conflits de demandes d'accès DAB; ces ensembles d'arbitrage sont reliés respectivement aux processeurs et au bus. Chacun d'eux comprend des moyens 4, 5 de traitement des demandes DAB d'accès au bus. Ces moyens de traitement sont reliés aux processeurs correspondants, ainsi qu'à un circuit de résolution 6 des priorités d'accès; le circuit de résolution 6 est relié au bus, aux moyens de traitement 4, 5 et au processeur 1. Comme on le verra plus loin en détail, ce circuit de résolution de priorités est capable d'attribuer des priorités fixes, rotatives ou des priorités à la fois fixes et rotatives, aux demandes d'accès DAB des divers processeurs. Une demande d'accès acceptée provoque l'apparition d'un signal DBA sur une sortie de l'ensemble d'arbitrage 3. Les moyens de traitement de demandes d'accès comprennent un circuit 4 de requête d'accès au bus et un circuit 5 de transmission de verdict d'arbitrage. Ces circuits seront décrits plus loin en détail. On a aussi représenté sur cette figure des moyens de supervision 7, qui seront décrits plus loin en détail, ces moyens de supervision permettent d'appliquer aux ensembles d'arbitrage, par l'intermédiaire du bus, un signal BNA; ce signal commande le changement d'ensemble d'arbitrage en cas de défaillance de cet ensemble; ce signal apparaît lorsque cet ensemble d'arbitrage, qui est maître du bus, n'a pas rendu de verdict d'arbitrage dans un délai prédéterminé.

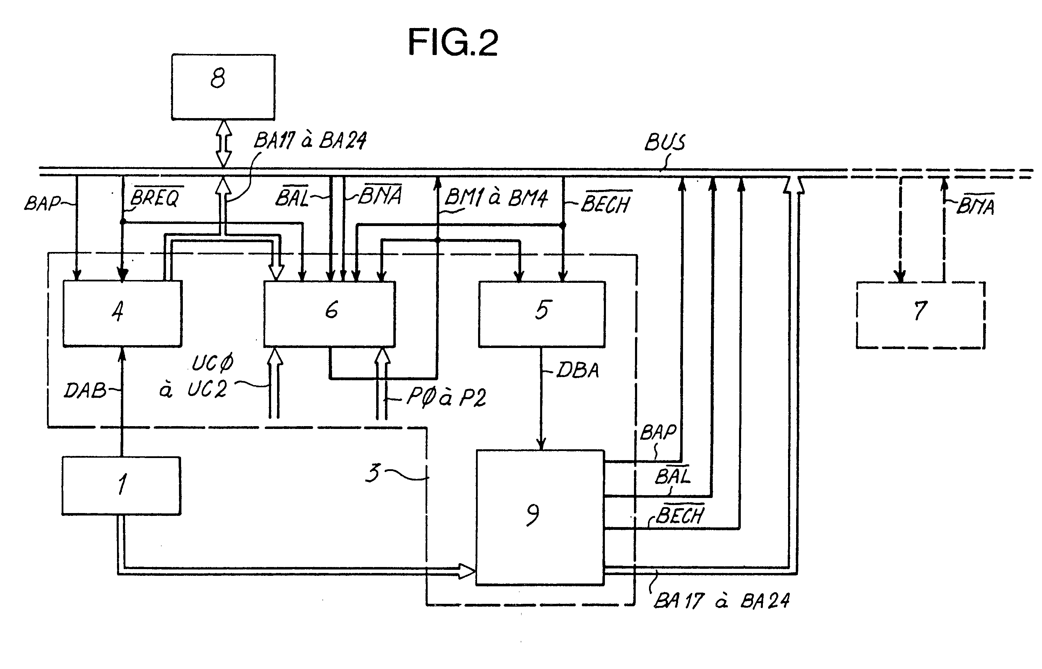

La figure 2 représente de manière plus détaillée l'un des ensembles d'arbitrage 3 relié au processeur 1, par exemple, et au bus, dans le système de l'invention. Les moyens 4, 5 de traitement de demande d'accès DAB comprennent un circuit 4 de requête d'accès du processeur au bus; ce circuit reçoit le signal DAB indiquant que le processeur 1 correspondant désire accéder au bus. Ce circuit reçoit également un signal BAP indiquant que l'arbitrage est possible. Les moyens de traitement des demandes d'accès comprennent aussi un circuit 5 de transmission d'un signal DBA (demande de bus acceptée) représentatif du verdict d'arbitrage de la demande d'accès (DAB) du processeur correspondant, en fonction des priorités des autres demandes d'accès. Les circuits de requête 4 et de transmission de verdict 5 sont reliés au bus, au processeur 1, ainsi qu'au circuit de gestion de priorités 6.

D'une manière générale, les signaux indiqués sur cette figure sont les suivants:

– DAB: signal indiquant une demande d'accès au bus; ce signal local est délivré par le processeur qui veut accéder au bus pour communiquer avec la mémoire 8 par exemple,

– BAP: ce signal indique qu'un arbitrage de l'accès au bus est possible, ce signal apparaît sur le bus commun et informe tous les ensembles d'arbitrage,

– DBA: demande de bus acceptée. Ce signal local informe un ensemble d'arbitrage que sa demande d'accès au bus est prise en compte et acceptée,

– $\overline{BREQ}$: signal sur le bus indiquant qu'il y a une requête d'accès à traiter,

– $\overline{BECH}$: échange sur le bus; ce signal reste actif durant l'exécution d'un échange sur le bus,

– BNA: signal sur le bus; il applique +1 aux circuits de résolution de priorités des ensembles d'arbitrage pour désigner un nouvel ensemble d'arbitrage,

– BM1 à BM3: 3 lignes du bus sur lesquelles les signaux forment le numéro encodé du processeur qui accède au bus,

– $\overline{BM4}$: signal de validation actif si son niveau logique est 0; valide les signaux BM1 à BM3,

– $\overline{BAL}$: signal de synchronisation fourni par le processeur qui accède au bus avec un certain retard sur le signal DBA.

Comme on le verra plus loin en détail, le circuit de transmission de verdict d'arbitrage 5, ainsi que le processeur 1, sont reliés au BUS commun par l'intermédiaire d'un interface 9.

Chaque circuit de résolution de priorités 6 comprend des moyens non représentés, qui seront décrits plus loin plus en détail et qui permettent d'appliquer aux circuits de résolution de priorités des autres ensembles d'arbitrage, des signaux BM1, BM2, BM3, $\overline{BM4}$, désignant l'ensemble d'arbitrage qui sera actif pour la prochaine demande d'accès au bus.

Le circuit 5 de transmission de verdict d'arbitrage comprend des moyens qui seront décrits plus loin et qui permettent à l'ensemble d'arbitrage désigné pour être maître du bus commun, de se reconnaître; dans ce cas, le circuit 5 de transmission de verdict fournit à son processeur un signal DBA qui indique l'acceptation de sa demande d'accès. Sur cette figure, UC0, UC1, UC2 sont des signaux locaux qui sont appliqués au circuit 6 de résolution de priorités pour désigner le numéro du processeur; les signaux P0, P1, P2 sont des signaux locaux qui définissent les critères de priorités (fixe, rotative ou mixte). Les signaux

$\overline{BAL}$, BAP, $\overline{BECH}$ sont des signaux de service qui seront décrits plus loin en détail et qui sont acheminés sur le bus BUS, par l'interface 9, lorsque le circuit de transmission de verdict d'arbitrage 5 a fourni un signal DBA indiquant que la demande DAB d'accès au bus est acceptée.

Le fonctionnement général du dispositif est le suivant: lorsqu'un processeur 1, par exemple, veut accéder au bus, il applique un signal DAB au circuit 4 de requête d'accès au bus de l'ensemble d'arbitrage 3 correspondant. Le circuit 4 de requête d'accès au bus transmet le signal DAB sur le bus, lorsqu'il y est autorisé par un signal BAP indiquant que l'arbitrage du bus est possible. La transmission du signal DAB sur le bus s'effectue de la manière suivante: un signal $\overline{BREQ}$, à l'état actif, parvient au bus tandis que l'une des lignes BA17 à BA24 est positionnée pour indiquer le numéro du processeur qui est candidat à l'accès au bus.

Le circuit 6 de résolution des priorités, qui fait intervenir des encodeurs et un circuit de brassage, mémorise les numéros des processeurs candidats à l'accès au bus, ces numéros sont disponibles comme on l'a mentionnée plus haut, sur l'une des lignes BA17 à BA24. Le circuit de résolution de priorité arbitre selon un critère de priorité (fixe et/ou rotative ou les deux à la fois), défini par des signaux de commande P0, P1, P2, les demandes d'accès au bus; il transmet au bus les signaux BM1, BM2, BM3 représentant le verdict d'arbitrage, ainsi que le signal de validation $\overline{BM4}$. Ces signaux sont aussi des signaux que reçoit le circuit de résolution de priorités, en provenance des autres ensembles d'arbitrage. En effet, ces signaux ne permettent au circuit de gestion de priorités considéré d'agir que s'il a été désigné comme ensemble d'arbitrage actif, à la fin de l'échange de données précédent sur le bus. Les signaux $\overline{BREQ}$, $\overline{BAL}$ et $\overline{BECH}$ sont des signaux de service et de synchronisation du circuit de résolution de priorités.

Le circuit 5 de transmission de verdict d'arbitrage a pour principale fonction de reconnaître si son processeur a ou non un numéro qui correspond à celui du futur ensemble d'arbitrage qui sera maître du bus et qui est désigné par les signaux BM1, BM2, BM3, BM4. Dans le cas où le numéro du processeur correspond au verdict BM1, BM2, BM3, le circuit de transmission de verdict fournit le signal DBA indiquant que la demande d'accès au bus est acceptée. Ce signal est alors appliqué à l'interface 9 entre l'ensemble d'arbitrage et le bus, pour gérer cet accès.

Les circuits 4 de requête d'accès au bus peuvent être actifs dans tous les ensembles d'arbitrage simultanément car tous les processeurs doivent pouvoir demander un accès au bus. Le circuit de résolution de priorités 6 n'est actif que pour l'ensemble d'arbitrage qui est actuellement maître du bus et qui arbitre le prochain échange sur ce bus. Enfin, le circuit de transmission de verdict d'arbitrage 5 est activé dans le futur ensemble d'arbitrage qui sera maître du bus et qui se reconnaît en début d'échange sur le bus, pour commander l'échange suivant.

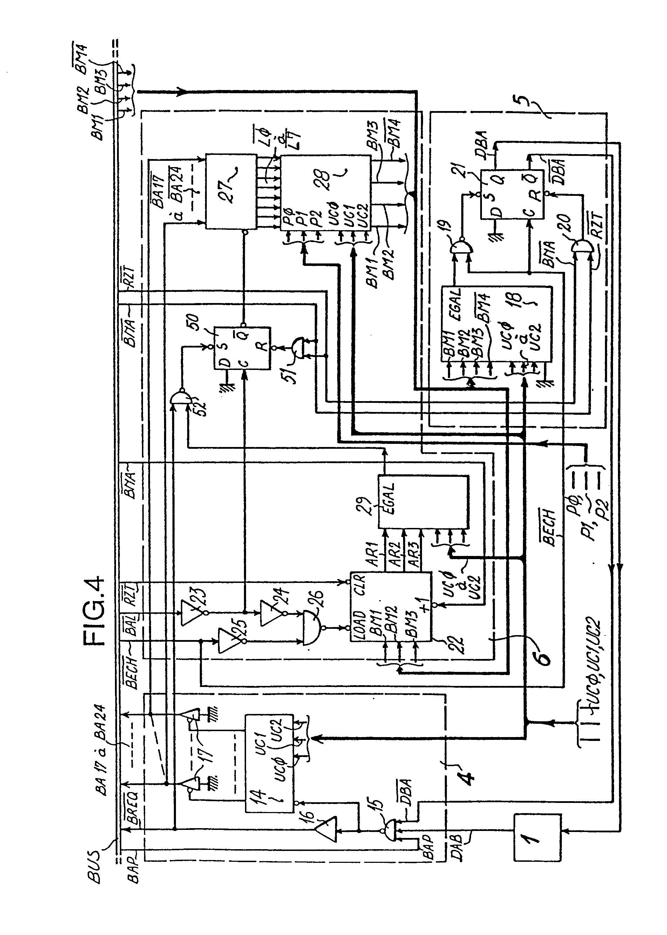

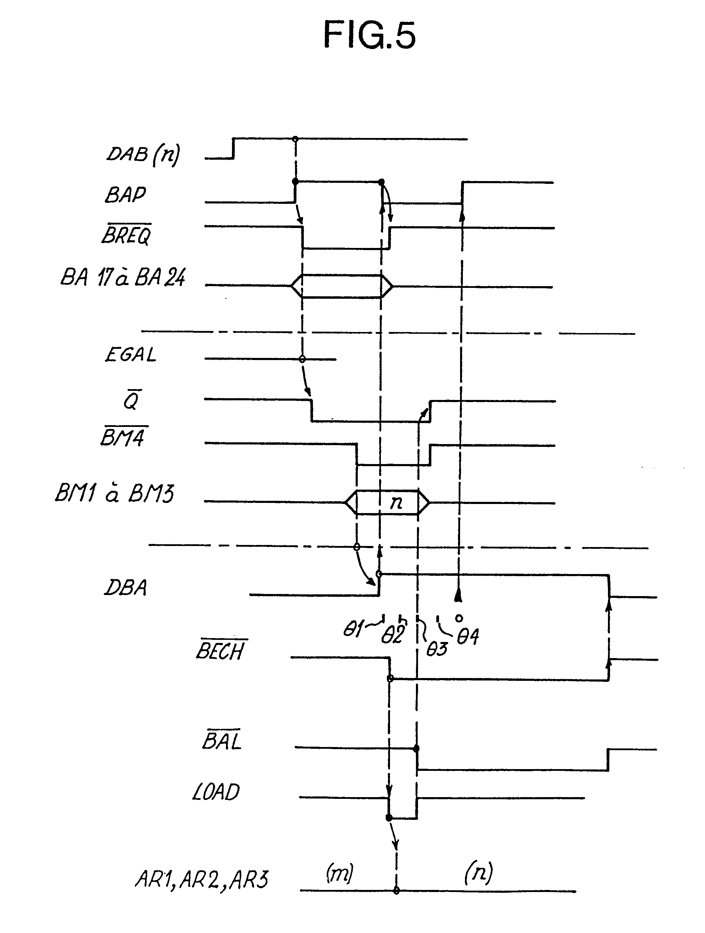

La figure 3 représente schématiquement les moyens de supervision 7 du système d'arbitrage de l'invention; ces moyens sont reliés au circuit 6 de résolution des priorités, par l'intermédiaire du bus, pour appliquer à ce circuit un signal BNA de commande de changement d'ensemble d'arbitrage 3, si un verdict d'arbitrage n'est pas rendu dans un délai prédéterminé. Ces moyens de supervision comprennent des moyens de temporisation 10 constitués par une bascule monostable par exemple dont une entrée de déclenchement 11 reçoit le signal BREQ émanant du circuit 4 de requête d'accès au bus. La sortie de la bascule 10 est reliée à une entrée d'une porte ET 12 à sortie inversée, une autre entrée de cette porte recevant le signal BAP provenant de l'interface 9 à travers le bus; ce signal indique que l'arbitrage entre les différentes demandes d'accès au bus est possible. Lorsque au bout d'une période prédéterminée, qui est fixée par la bascule 10, le verdict n'est pas rendu et que BREQ reste donc actif, la sortie de la porte 12 fournit un signal BNA. Ce signal est appliqué aux différents ensembles d'arbitrage de système, par l'intermédiaire du bus, pour provoquer la sélection d'un nouvel arbitre. En fait, ce signal permet d'appliquer la valeur -1 sur les circuits de résolution de priorités des ensembles d'arbitrage, pour désigner un nouvel ensemble d'arbitrage.

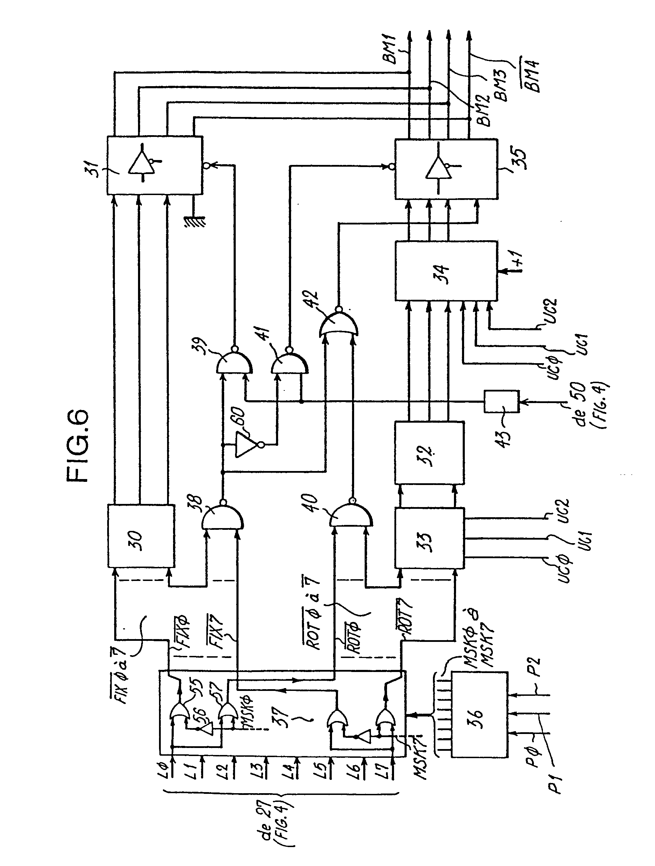

La figure 4 représente de manière plus détaillée l'un des ensemble 3 d'arbitrage de demande d'accès. Sur cette figure, on distingue le bus qui permet de mettre en communication l'un des processeurs, tel que le processeur 1, avec des ressources non représentées sur cette figure, par l'intermédiaire de l'un des ensembles d'arbitrage. Ces moyens d'arbitrage sont constitués, comme on l'a mentionné plus haut, par un circuit de requête d'accès 4, un circuit de transmission de verdict 5 et un circuit de résolution de priorités 6, qui comprend notamment un ensemble de résolution de priorités 28 qui sera décrit plus loin en détail.

Le circuit de requête d'accès 4 est constitué par un décodeur 14 de type 74LS138, qui permet de passer d'un code à trois éléments binaires à un code à huit éléments binaires. Une porte ET 15, à sortie inversée, à trois entrées, reçoit les signaux BAP indiquant qu'un arbitrage est possible sur le bus, DAB indiquant que le processeur demande un accès au bus et DBA qui n'est fourni à cette porte que lorsque la demande d'accès est acceptée. La sortie de la porte 15 est reliée d'une part à une entrée de validation du décodeur 14 et, d'autre part, à une entrée d'un amplificateur 16 dont la sortie fournit un signal BREQ. Ce signal indique aux autres ensembles d'arbitrage, qu'au moins l'un des ensembles d'arbitrage a demandé un accès au bus. Le décodeur 14 reçoit également les signaux binaire UC0, UC1, UC2, qui représentent, sous forme binaire, le numéro du processeur correspondant à cet ensemble d'arbitrage qui demande un accès au bus de communication. Les sorties du décodeur 14 sont reliées respectivement aux lignes de transmission BA17 à BA24 par l'intermédiaire d'amplificateurs 17, de sorte que la requête de demande d'accès éventuelle de l'ensemble d'arbitrage considéré soit transmise au bus par l'une de ces lignes de communication qui correspond au numéro de l'ensemble d'arbitrage considéré (qui est d'ailleurs le numéro du processeur correspondant à cet ensemble d'arbitrage). Le décodeur 14 n'est activé que s'il y a une demande d'accès au bus DAB qui n'est pas en cours de satisfaction (DBA) et si l'arbitrage est autorisé par le signal BAP. Dans ce cas, l'ensemble d'arbitrage actif est informé par le signal BREQ qu'il y a une requête d'accès à traiter dès que possible.

Le circuit de transmission de verdict d'arbitrage 5 comprend un comparateur 18 à quatre éléments binaire du type 74LS85 qui reçoit d'une part le numéro UC0, UC1, UC2 de son processeur correspondant et, d'autre part, les signaux binaires BM1, BM2, BM3, BM4. Les signaux BM1 à BM3 sont fournis par trois lignes de communication venant du bus et indiquent le numéro du processeur qui va accéder au bus par l'intermédiaire de l'ensemble d'arbitrage qui lui correspond. Le signal BM4 qui est également fourni par l'une des lignes de communication avec le bus, est un signal de validation qui est actif lorsque son niveau logique est égale à 0 et qui permet de valider les signaux BM1 à BM3. Le circuit logique de transmission de verdict 5 comprend également une porte ET 19 à sortie inversée ainsi qu'une porte ET 20. Les sorties de ces portes sont reliées aux entrées de commande R, S d'une bascule 21 de type RS. Les entrées de la porte 19 sont reliées d'une part à une sortie du comparateur 18 qui fournit un signal d'égalité EGAL et, d'autre part, à une ligne de transmission du bus de communication qui fournit un signal BECH indiquant qu'un échange est exécuté sur le bus de communication. Le comparateur 18 reçoit d'une part les signaux BM1, BM2, BM3, BM4 et, d'autre part, les signaux UC0, UC1, UC2 mentionnés plus haut. La porte ET 20 reçoit le signal BNA provenant du bus de communication; ce signal permet de désigner un nouvel arbitre en appliquant au circuit de gestion de priorités un signal égal à -1. La porte ET 20 reçoit aussi par un signal RZT qui est un signal de remise à zéro totale du système. Les sorties Q et Q de la bascule 21 sont reliées respectivement à une entrée de la porte ET 15 et à une entrée de commande de l'interface 9, non représenté sur la figure. Ces sorties fournissent respectivement le signal DBA qui indique que la demande d'accès au bus est acceptée et le signal DBA qui permet, par l'intermédiaire de la porte ET 15, de faire retomber le signal BREQ dont la demande est en cours de traitement. Le circuit de transmission de verdict 5 est chargé d'informer l'ensemble d'arbitrage sélectionné par l'arbitrage en cours, qu'il peut accéder au bus. En fin d'échange de données sur le bus de communication, la bascule 21 est mise à 0, dans tous les ensembles d'arbitrage de demande d'accès, par l'intermédiaire du signal BECH fourni par le bus de communication.

Seul, l'ensemble d'arbitrage qui est désigné par l'arbitrage en cours se reconnaît par le signal EGAL qui vient forcer la bascule 21 au niveau logique 1, à la fin de l'échange sur le bus de communication. La sortie de la bascule 21 fournit le signal DBA à l'interface 9, pour que celui-ci puisse commencer à effectuer un échange sur le bus.

Le circuit de résolution de priorités 6 comprend un compteur 22 à chargement parallèle; ce compteur bien connu dans l'état de la technique reçoit les signaux BM1, BM2, BM3 qui indiquent le numéro, codé sur trois éléments binaires, du prochain ensemble d'arbitrage; il reçoit également sur ses entrées de commande un signal $\overline{RZT}$ de remise à 0 et le signal $\overline{BNA}$ sur son entrée de comptage. Ce compteur est également relié par son entrée LOAD à un circuit qui comprend les inverseurs 23, 24, 25 et la porte ET 26 à sortie inversée. Ce circuit reçoit les signaux $\overline{BECH}$ et $\overline{BAL}$ décrits plus haut. Les sorties du compteur 22 sont reliées aux entrées d'un comparateur 29 identique au comparateur 18. Ces sorties fournissent à ce comparateur des signaux AR1, AR2, AR3 représentant le numéro codé sur trois éléments binaires de l'ensemble d'arbitrage désigné pour arbitrer le nouvel échange. Ce comparateur reçoit également sur trois autres entrée le numéro UC0, UC1, UC2 du processeur sur lequel il se trouve. Par principe, c'est l'ensemble d'arbitrage dont le processeur correspondant accède au bus de communication, qui est désigné pour arbitrer l'échange suivant. Le compteur 22 assure la mémorisation du numéro de l'ensemble d'arbitrage désigné, à chaque début d'échange. Ce début d'échange a lieu lorsque le signal $\overline{BECH}$ est au niveau logique 0. A l'initialisation par le signal $\overline{RZT}$, le compteur est forcé à 0. En cas de défaillance de l'ensemble d'arbitrage, les moyens de supervision qui ont été décrits plus haut fournissent le signal $\overline{BNA}$. Ce signal modifie les signaux AR1, AR2, AR3, entrant dans le comparateur 29, de manière à commander la désignation d'un nouvel ensemble d'arbitrage. Le comparateur permet de n'activer que l'ensemble d'arbitrage dont le numéro UC0, UC1, UC2 est égal au numéro codé par AR1, AR2, AR3. Le circuit de résolution de priorités comprend aussi une bascule 50 de type RS, dont les entrées de commande R et S sont reliées respectivement aux sorties de portes ET 51 et 52. La porte 51 reçoit respectivement sur ses entrées, les signaux $\overline{BNA}$ et $\overline{RZT}$ mentionnés plus haut. La porte 52 reçoit le signal $\overline{BREQ}$ indiquant qu'il y a une demande d'accès au bus de communication, et le signal EGAL de sortie du comparateur 29. La bascule 50 n'est active que pour l'ensemble d'arbitrage désigné par les signaux AR1, AR2, AR3. Cette bascule sert à commander un ensemble de bascules à verrouillage 27. La bascule à verrouillage 27 reçoit sur ses entrées les signaux BA17 à BA24 qui indiquent, comme on l'a vu plus haut, les numéros des processeurs qui ont demandé un accès au bus de communication. La bascule 27 est transparente lorsque le signal $\overline{BREQ}$ qui lui est fourni par l'intermédiaire de la bascule 24 est à un niveau logique 1. La bascule à verrouillage mémorise les demandes $\overline{BA17}$ à $\overline{BA24}$, sur le front descendant du signal BREQ, fourni par la sortie Q de la bascule 50. La bascule à verrouillage 27 redevient transparente pour les signaux qu'elle reçoit sur ses entrées, lorsque la bascule 50 est activée sur le front descendant du signal $\overline{BAL}$.

Enfin, le circuit de gestion de priorités comprend également un ensemble de résolution de priorités 28 qui reçoit sur ses entrées des signaux $\overline{L\emptyset}$, $\overline{L1}$, ... $\overline{L7}$ provenant de la bascule à verrouillage 27. Cet ensemble de gestion de priorités fournit en sortie les signaux BM1, BM2, BM3, $\overline{BM4}$ qui permettent d'indiquer le numéro codé de l'ensemble d'arbitrage qui peut accéder au bus de communication.

La figure 5 est un chronogramme des principaux signaux qui interviennent dans le système de l'invention. Sur cette figure, on a représenté différents signaux et leur enchaînement, lors de l'arbitrage d'une demande d'accès au bus de communication, cette demande d'accès provenant du processeur et de l'ensemble d'arbitrage de numéro n. On supposera d'autre part que l'échange précédent a été mené par le processeur m, ce qui implique que c'est l'ensemble d'arbitrage m qui va arbitrer la demande d'accès qui va être décrite en détail. Sur le chronogramme, le demande d'accès au bus de communication, formulée à l'ensemble d'arbitrage n par son processeur, est représentée par le signal DAB. Le passage au niveau logique 1 du signal BAP (arbitrage possible) provoque, d'une part, la mise à l'état actif du signal $\overline{BREQ}$ et, d'autre part, l'activation de l'une des lignes de communication BA17 à BA24 qui correspond au numéro n. Toutes ces actions sont effectuées par le circuit de requête d'accès de l'ensemble d'arbitrage n.

Sur le circuit de résolution de priorités de l'ensemble d'arbitrage m, il y a égalité (signal EGAL) entre les signaux AR1, AR2, AR3 et UC$\emptyset$, UC1, UC2; ces signaux représentent deux mots de trois éléments binaires correspondant à la valeur m. Le signal EGAL est celui qui est disponible à la sortie du comparateur 29 sur la figure 4. Ce signal EGAL étant égal à 1, le front descendant du signal $\overline{BREQ}$ va franchir la porte 52 et provoquer, par l'intermédiaire de la sortie $\overline{Q}$ de la bascule 50, le verrouillage des signaux $\overline{BA17}$ à $\overline{BA24}$. Les signaux $\overline{BA17}$ à $\overline{BA24}$ sont ceux qui parviennent à l'entrée de la bascule 27 à verrouillage. L'ensemble de résolution de priorités 28 rend alors un verdict représenté par les signaux BM1, BM2, BM3, ce verdict étant validé par le signal $\overline{BM4}$. Ce verdict, si aucune autre demande d'accès au bus de communication n'est présente, est égal au numéro n de l'ensemble d'arbitrage qui demande l'accès au bus de communication.

Le circuit de transmission de verdict d'arbitrage de l'ensemble d'arbitrage n va alors se reconnaître et délivrer à son processeur le signal DBA, à travers l'interface 9 (figure 2). Ce signal DBA fait passer le signal BAP à l'état inactif (niveau logique 0) et commande le démarrage d'une base de temps (θ1, θ2, θ3, θ4) propre à l'ensemble d'arbitrage n. Cette base de temps n'a pas été représentée sur les figures, pour des commodités de représentation. Elle permet de calibrer tous les signaux émis par l'ensemble d'arbitrage et notamment les signaux BECH, BA17 à BA24, BAL. Les signaux BECH et BAL qui sont créés par la base de temps, sont utilisés pour remettre le signal $\overline{Q}$ de la bascule 50, au niveau logique 1, (état transparent de la bascule 27 à verrouillage) et pour créer une impulsion négative LOAD (porte 26, figure 4) qui permet de charger le compteur 22 par la valeur du numéro du futur ensemble d'arbitrage n.

La figure 6 est un schéma détaillé de l'ensemble 28 (figure 4) de résolution de priorité. Cet ensemble de résolution de priorité comprend un encodeur 30 à priorité fixe (de type LS148). Cet ensemble comprend également un encodeur à priorité rotative, constitué par un autre encodeur à priorité fixe 32, précédé par un réseau de brassage circulaire 33 des signaux d'accès ROTØ à ROT7 et suivi par un additionneur 34 ajoutant au résultat intermédiaire, la valeur UCØ, UC1, UC2 +1. Il comprend aussi un circuit logique de commande d'aiguillage 36 qui commande un circuit logique d'aiguillage 37. Le circuit d'aiguillage 37 comprend des portes OU55 qui reçoivent respectivement sur leur première entrée, les signaux $\overline{LØ}$,...$\overline{L7}$ provenant de la bascule à verrouillage 27. Les signaux MSKØ,... MSK7 de commande d'aiguillage fournis par le circuit de commande 36 sont appliqués respectivement sur la deuxième entrée des portes OU55, par l'intermédiaire d'inverseurs 56. Ces signaux seront décrits plus loin. Ce circuit d'aiguillage 37 comprend aussi des portes OU57 qui reçoivent respectivement sur leurs entrées, les signaux LØ, L1,... L7 et MSK0, MSK1... MSK7. Les sorties du circuit logique d'aiguillage 37 sont reliées aux entrées de l'encodeur 30, du réseau de brassage circulaire 33 et aux entrées d'un circuit logique qui comporte les portes ET 38, 39, 40, 41, à sorties inversées. La sortie de la porte 39 est reliée à l'entrée de commande d'une porte 31 à 3 états, tandis que la sortie d'une porte 41 est reliée à l'entrée de commande d'une porte 35 à 3 états. Les sorties des portes 38 et 40, sont respectivement reliées aux entrées d'une porte OU42 dont la sortie inversée est reliée à une entrée de la porte 35 à 3 états. L'une des entrées de la porte ET 41 reçoit le signal $\overline{Q}$ provenant de la bascule 50 (figure 4). Ce signal est appliqué à l'entrée de la porte ET 41, à travers une ligne à retard 43.

En fait, les portes 31 et 35 à 3 états sont des portes de type 74LS125. Elles permettent d'effectuer un multiplexage des signaux reçus sur leurs entrées et provenant respectivement de l'encodeur 31 à priorité fixe et de l'additionneur 34 faisant partie de l'encodeur à priorité rotative (33, 32, 34). Le circuit constitué par les portes 38, 39, 41 et par l'inverseur 60 est en fait un circuit de commande de multiplexage des priorités fixes et des priorités rotatives, puisque les portes 39 et 41 fournissent toujours des signaux de commande opposés.

Les signaux d'entrée $\overline{LØ}$, $\overline{L1}$,... $\overline{L7}$, appliqués aux entrées du circuit logique d'aiguillage 37 proviennent des sorties de la bascule à verrouillage 27. L'ensemble de gestion représenté sur la figure fournit comme on le verra plus loin en détail, les signaux BM1, BM2, BM3 qui désignent le numéro de l'ensemble d'arbitrage désigné pour accéder au bus; cet ensemble de gestion fournit également le signal $\overline{BM4}$ qui permet de valider l'arbitrage. Le système de l'invention permettant la gestion des priorités fixes et rotatives en même temps, les signaux PØ, P1, P2 sont des signaux qui permettent de programmer ces priorités. Les signaux PØ, P1, P2 représentent, sous forme codée binaire, le nombre N d'ensembles d'arbitrage que l'on désire voir traités en priorité fixe. On suppose que les ensembles d'arbitrage qui fonctionnent en priorité fixe portent les numéros 0, 1,..., N-1 tandis que les ensembles d'arbitrage à priorité rotative portent les numéros N, N+1,..., 7 (Dans le cas où il y a par exemple 8 ensembles d'arbitrage sur le bus de communication).

Par hypothèse, les ensembles d'arbitrage en priorité fixe sont de priorité supérieure aux ensembles d'arbitrage à priorité rotative.

Des commandes d'aiguillage représentées par les signaux MSKØ, MSK1,... MSK7, sont obtenues à partir des signaux P0, P1, P2. Cet aiguillage permet d'aiguiller les signaux $\overline{LØ}$, $\overline{L1}$,... $\overline{L7}$ vers l'encodeur à priorité fixe ou vers l'encodeur à priorité rotative selon la valeur de MSKØ à MSK7. Les signaux de commande d'aiguillage MSKØ à MSK7 agissent de la façon suivante: si en a codé PØ, P1, P2 pour représenter la valeur N souhaitant ainsi que les ensembles d'arbitrage 0, 1... N-1 soient traités en priorité fixe et les ensembles d'arbitrage N, N+1,..., 7 en priorité rotative, les signaux MSKØ, MSK1... MSK(N-1) vont assurer la transmission de $\overline{LØ}$, $\overline{L1}$..., $\overline{L(N-1)}$ sur l'encodeur à priorité fixe 30 [signaux $\overline{FIXØ}$, $\overline{FIX1}$,... $\overline{FIX(N-1)}$]. Ils vont de plus mettre à l'état inactif les signaux $\overline{ROTØ}$, $\overline{ROT1}$,..., $\overline{ROT(N-1)}$ qui ne doivent pas être considérés par l'encodeur à priorité rotative.

De manière identique, MSKN,... MSK7 rendent inactifs FIXN,... FIX7 sur l'encodeur à priorité fixe et transmettent $\overline{LN}$... $\overline{L7}$ à l'encodeur à priorité rotative, transmission qui se traduit par les signaux ROTN à ROT7.

L'activité éventuelle de l'encodeur à priorité fixe est détectée par la porte 38 et inhibe le résultat de l'encodeur à priorité rotative en forçant la porte 35 au troisième état. Si l'encodeur à priorité fixe est inactif, la porte 38 force par contre la porte 31 au troisième état et autorise, par la porte 41, l'encodeur à priorité rotative à rendre le verdict, car, en cas de fonctionnement normal, l'un au moins des deux encodeurs est actif. Si les deux encodeurs sont inactifs, l'encodeur à priorité rotative délivre le signal $\overline{BM4}$ au niveau logique 1. Ce cas résulte par exemple d'un signal parasite: il y a une demande d'accès au bus mais aucun signal n'est actif sur la bascule de verrouillage.

On notera que l'on introduit sur le signal $\overline{Q}$ de sortie de la bascule 24, un retard qui permet aux encodeurs 30, 32 de fournir un résultat stable avant que l'une des 2 portes 31, 35, à 3 états, ne soit ouverte.

Le circuit logique d'aiguillage 37 reçoit les signaux L0 à L7 qui sont actifs lorsque leur niveau logique est égal à 0. D'après les explications fournies plus haut, les signaux MSKØ à MSK7 définissent un masque qui effectue les opérations logiques suivantes, pour n = 0 à 7:

$$\text{ROTn} = \overline{\text{MSKn}} + \text{Ln}$$
$$\text{FIXn} = \overline{\text{MSKn}} + \text{Ln}$$

Les signaux ROTØ à ROT7 et FIXØ à FIX7 sont respectivement appliqués aux encodeurs à priorités fixe et rotative 30, 32. Les signaux MSKØ à MSK7 fournis par le circuit logique 36 de commande d'aiguillage répondent aux équations suivantes:

$$\text{MSK0} = \text{P0} + \text{P1} + \text{P2}$$
$$\text{MSK1} = \text{P1} + \text{P2}$$
$$\text{MSK2} = \text{P2} + \text{P1.P0}$$
$$\text{MSK3} = \text{P2}$$
$$\text{MSK4} = \text{P2(P1} + \text{P0)}$$
$$\text{MSK5} = \text{P2.P1}$$
$$\text{MSK6} = \text{MSK7} = \text{P2.P1.P0.}$$

Dans ces équations, PØ est le poids le plus faible du code.

Si l'on désire par exemple disposer de trois ensembles d'arbitrage en priorité fixe, on a les équations suivantes:

$$\text{P2.P1.P0} = 011$$

et on en déduit que:

$$\text{MSK7} \dots \text{MSK}\emptyset = 00000111$$

L'encodeur à priorité rotative fonctionne selon le principe suivant: Si l'encodeur actif est celui de l'ensemble d'arbitrage no 3 codé par UCØ, UC1, UC2, la priorité rotative la plus forte est alors attribuée à l'ensemble d'arbitrage no 4 dont la requête éventuelle d'accès au bus est présentée, grâce au réseau de brassage 33, sur l'encodeur fixe 32 avec la plus forte priorité. Le brassage des autres requêtes d'accès se déduit de là par permutation circulaire. Si l'ensemble d'arbitrage no 4 demande un accès au bus, la sortie de l'encodeur a priorité fixe va être celle qui a pour numéro 7 (demande la plus prioritaire). Comme l'encodeur 32 fournit des signaux actifs au niveau logique zéro la sortie correspondant à la priorité la plus forte 7, va être à 0. L'addition de ce résultat, du numéro de l'ensemble d'arbitrage (3) et de +1, qui est réalisée par 34, va bien donner le nombre 4 qui désigne ainsi l'ensemble d'arbitrage no 4, comme futur maître du bus.

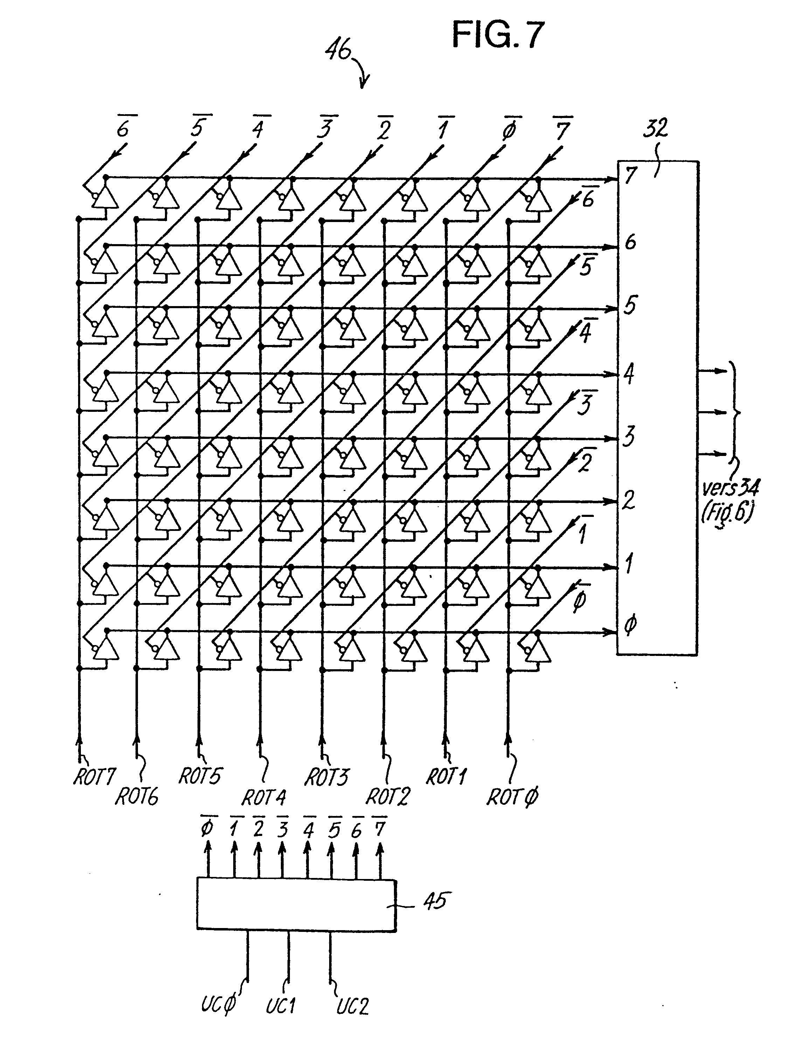

La figure 7 représente le détail du réseau de brassage 33 de l'encodeur à priorité rotative. Cet encodeur est constitué, comme on l'a mentionné plus haut, par un encodeur à priorité fixe 32, précédé d'un réseau de brassage circulaire 33 et muni d'un additionneur 34 ajoutant au résultat intermédiaire le numéro de l'ensemble d'arbitrage (UCØ, UC1, UC2) augmenté d'une unité. Le réseau de brassage circulaire comprend un décodeur 45 (de type LS138) à trois entrées et à huit sorties. Ce décodeur permet de sélectionner l'une des diagonales $\overline{0}, \overline{1}, \dots \overline{7}$ du réseau de brassage 46. Toutes les autres diagonales sont alors inactives et les portes 59 à trois états qu'elles commandent, sont dans le troisième état. Ces portes sont alors sans action sur les entrées 0, 1, 2, 3 . . ., 7 de l'encodeur 32 à priorité fixe. On constate que pour chaque entrée de l'encodeur 32, il n'y a toujours qu'une seule porte à trois états qui est activée. Le réseau de brassage achemine alors sur le niveau le plus prioritaire de l'encodeur à priorité fixe 32, (niveau 7) la demande $\overline{\text{ROTN}}$ du processeur ayant le numéro N correspondant à UCØ, UC1, UC2 +1, au moyen de la porte à 3 états activée par la diagonale de numéro UCØ, UC1, UC2.

Le système d'arbitrage qui vient d'être décrit permet d'arbitrer les conflits d'accès à un bus sur lequel peuvent être interconnectés jusqu'à huit ensembles d'arbitrage. Le bus est indépendant des processeurs ou des microprocesseurs et peut être multiplexé ou non. L'arbitrage réalisé est décentralisé, parallèle, asynchrone; il est effectué en un temps voisin de 100 nanosecondes. L'ensemble d'arbitrage peut être intégré sous un même boîtier, pour le deuxième mode de réalisation de l'invention, car tous les circuits sont standards. L'intégration, dans le cas du premier mode de réalisation de l'invention (codage de priorités avec mémoire PROM) serait également possible, mais sous un boîtier ne présentant pas un nombre de broches standard, car dans ce cas, la programmation de la mémoire PROM nécessite des broches supplémentaires.

Il est bien évident que dans le système qui vient d'être décrit, les moyens utilisés auraient pu être remplacés par des moyens équivalents, sans sortir du cadre de l'invention.

## Revendications

1. Système d'arbitrage de demandes d'accès de plusieurs processeurs (1, 2) à des ressources communes (3), par l'intermédiaire d'un bus commun (BUS), comprenant pour chaque processeur (1) un ensemble d'arbitrage (3) des conflits des demandes d'accès (DAB), cet ensemble (3) d'arbitrage comprenant des moyens de traitement (4, 5) des demandes d'accès (DAB) reliés au bus et au processeur (1) et un circuit de résolution des priorités (6) d'accès, relié au bus, aux moyens de traitement (4, 5) des demandes d'accès et au processeur (1), ce circuit de résolution étant capable d'attribuer aux demandes d'accès (DAB) des priorités fixes, rotatives, ou des priorités à la fois fixes et rotatives, les moyens de traitement des demandes d'accès comprenant un circuit (4) de requête d'accès au bus recevant un signal (DAB) indiquant une demande d'accès du processeur correspondant à l'ensemble d'arbitrage considéré, ainsi qu'un signal (BREQ) indiquant si d'autres processeurs ont effectué une demande d'accès, et un circuit (5) de transmission d'un signal (DBA) représentatif du verdict d'arbitrage de la demande d'accès du processeur (1) correspondant, en fonction des priorités des autres demandes d'accès, ces circuits de requête (4) et de transmission de verdict (5) étant reliés au bus, au processeur (1) et au circuit de résolution de priorités (6) le circuit de transmission (5) de verdict d'arbitrage comprenant des moyens pour reconnaître si l'ensemble d'arbitrage (3) désigné pour être maître du bus correspond à un processeur (1) qui fournit un signal de demande d'accès (DAB) et pour fournir à ce processeur un signal (DBA) indiquant l'acceptation de cette demande, chaque ensemble d'arbitrage (3) comprenant en outre un interface (9) reliant le processeur (1) et le circuit de transmission de verdict d'arbitrage (5) avec le bus, caractérisé en ce que le circuit de résolution de priorité (6) de chaque ensemble d'arbitrage (3) comprend en outre un ensemble de résolution de priorités (28) qui comporte un encodeur à priorité fixe (30) pour coder les demandes d'accès des ensembles d'arbitrage qui fonctionnent en priorité fixe et un encodeur à priorité rotative pour coder les priorités des ensembles d'arbitrage fonctionnant en priorité rotative, cet encodeur à priorité rotative comprenant au moins un encodeur à priorité fixe (32) précédé d'un réseau (33) de brassage circulaire des demandes d'accès et suivi d'un additionneur (34) de la valeur +1 et du numéro (UC0, UC1, UC2) du processeur qui demande accès au bus, les entrées de l'encodeur à priorité fixe et de l'encodeur à priorité rotative étant reliées aux sorties d'un circuit logique (37) pour aiguiller respectivement vers les encodeurs à priorités fixe et rotative, les demandes des ensembles d'arbitrage qui fonctionnent en priorité fixe et les demandes des ensembles d'arbitrage qui fonctionnent en priorité rotative, chaque circuit de résolution de priorité (6) comprenant des moyens pour appliquer aux circuits de résolution de priorités des autres ensembles d'arbitrage, des signaux (BM1, BM2, BM3, BM4) désignant l'ensemble d'arbitrage qui sera actif pour la prochaine demande d'accès au bus.

2. Système d'arbitrage selon la revendication 1, caractérisé en ce qu'il comprend en outre des moyens de supervision (7) reliés aux circuits de résolution de priorités (6) par l'intermédiaire du bus, pour appliquer à ces circuits un signal (BNA) de commande de changement d'ensemble d'arbitrage si un verdict d'arbitrage n'est pas rendu dans un délai prédéterminé.

3. Système d'arbitrage selon la revendication 1, caractérisé en ce que les moyens de supervision (7) sont constitués par des moyens de temporisation (10) dont l'entrée est reliée au bus pour recevoir les signaux (BREQ) indiquant que d'autres processeurs ont effectué des demandes d'accès, une sortie de ces moyens de temporisation fournissant le signal de commande de changement d'ensemble d'arbitrage (BNA) aux circuits de résolution de priorités si un verdict d'arbitrage n'est pas rendu dans un délai prédéterminé.

4. Système d'arbitrage selon l'une quelconque des revendications 2 et 3, caractérisé en ce que chaque ensemble d'arbitrage est réalisé sous forme d'un circuit intégré sur un substrat, enfermés dans un boîtier standard.

**Patentansprüche**

1. Entscheidungssystem für die Zugriffsnachfragen mehrerer Prozessoren (1, 2) auf gemeinsame Hilfsquellen (3) mittels eines gemeinsamen Übertragungsweges (BUS) mit einer Entscheidungseinheit (3) für Konflikte bei allen Zugriffsnachfragen (DAB), wobei diese Entscheidungseinheit (3) Verarbeitungsmittel (4, 5) für die Zugriffsnachfragen (DAB), die mit dem Übertragungsweg und dem Prozessor (1) verbunden sind, und einen Auflösungskreis (6) für die Zugriffsvorränge aufweist, der mit dem Übertragungsweg, den Verarbeitungsmitteln (4, 5) für die Zugriffsnachfragen und dem Prozessor (1) verbunden ist, wobei der Auflösungskreis den Zugriffsnachfragen (DAB) feste, Umlaufvorränge oder gleichzeitig feste Vorränge und Umlaufvorränge zuteilen kann, die Verarbeitungsmittel der Zugriffsnachfragen einen Anfragekreis (4) für den Zugriff zu dem Übertragungsweg, welcher ein Signal (DAB), welches eine Zugriffsnachfrage des der betrachteten Entscheidungseinheit entsprechenden Prozessors anzeigt, sowie ein Signal (BREQ) erhält, welches anzeigt, ob andere Prozessoren eine Zugriffsnachfrage durchgeführt haben, und einen Übertragungskreis (5) für ein Signal (DBA) aufweisen, welches die Entscheidung über die Zugriffsnachfrage des entsprechenden Prozessors (1) als Funktion der Vorränge der anderen Zugriffsnachfragen darstellt, wobei der Kreis für die Anfrage (4) und derjenige für die Entscheidungsübertragung (5) mit dem Übertragungsweg, dem Prozessor (1) und dem Auflösungskreis für die Vorränge (6) verbunden ist, der Übertragungskreis (5) für die Entscheidung Mittel umfasst, um zu erkennen, ob die für die Beherrschung des Übertragungsweges bezeichnete Entscheidungseinheit (3) einem Prozessor (1) entspricht, der ein Zugriffsnachfragesignal (DAB) liefert, und um diesem Prozessor ein Signal (DBA) zuzuführen, welches die Annahme dieser Nachfrage anzeigt, wobei jede Entscheidungseinheit (3) ferner eine Schnittstelle (9) aufweist, die den Prozessor (1) und den Übertragungskreis (5) für die Entscheidung mit dem Übertragungsweg verbindet, dadurch gekennzeichnet, dass der Auflösungskreis für den Vorrang (6) einer jeden Entscheidungseinheit (3) ferner eine Einheit (28) zur Auflösung der Vorränge umfasst, die einen Encoder mit festem Vorrang (30) zum Kodieren der Zugriffsnachfragen der Entscheidungseinheiten, die mit festem Vorrang arbeiten, und einen Encoder mit Umlaufvorrang aufweist, um die Vorränge der Entscheidungseinheiten zu kodieren, die mit Umlaufvorrang arbeiten, dass dieser Encoder mit Umlaufvorrang wenigstens einen Encoder (32) mit festem Vorrang aufweist, dem eine Kreisumcodierungsschaltung (33) für die Zugriffsnachfragen vorangeht, und der von einer Addierschaltung (34) für den Wert +1 und die Nummer (UC0, UC1, UC2) des Prozessors gefolgt ist, der Zugriff zu dem Übertragungsweg verlangt hat, dass die Eingänge des Encoders mit festem Vorrang und des Encoders mit Umlaufvorrang mit den Ausgängen eines Logikkreises (37) verbunden sind, um zu den Encoder mit festem Vorrang bzw. mit umlaufenden Vorrang die Nachfragen der mit festem Vorrang arbeitenden Entscheidungseinheiten und die Nachfragen der mit Umlaufvorrang arbeitenden Entscheidungseinheiten zu lenken, und dass jeder Auflösungskreis (6) für den Vorrang Mittel aufweist, um andere Entscheidungseinheiten auf die Auflösungskreise für die Vorränge anzuwenden, wobei Signale (BM1, BM2, BM3, BM4) die Entscheidungseinheit bezeichnen, die für die nächste Zugriffsnachfrage zu dem Übertragungsweg aktiv sein wird.

2. Entscheidungssystem nach Anspruch 1, dadurch gekennzeichnet, dass es ferner Überwachungsmittel (7), die mit den Auflösungskreisen für die Vorränge (6) über den Übertragungsweg verbunden sind, aufweist, um an diese Kreise ein Steuersignal (BNA) zur Änderung der Entscheidungseinheit anzulegen, wenn innerhalb einer vorbestimmten Dauer keine Entscheidung gefallen ist.

3. Entscheidungssystem nach Anspruch 1, dadurch gekennzeichnet, dass die Überwachungsmittel (7) von Verzögerungseinrichtungen (10) gebildet sind, deren Eingang mit dem Übertragungsweg verbunden ist, um Signale (BREQ) zu empfangen, die anzeigen, dass andere Prozessoren Zugriffsnachfragen durchgeführt haben, und dass ein Ausgang dieser Verzögerungseinrichtungen das Steuersignal (BNA) zur Änderung der Entscheidungseinheit an die Auflösungskreise für die Vorränge liefert, wenn keine Entscheidung innerhalb einer vorbestimmten Zeitdauer getroffen worden ist.

4. Entscheidungssystem nach Anspruch 2 oder 3, dadurch gekennzeichnet, dass jede Entscheidungseinheit in der Form eines integrierten Schaltkreises auf einem Träger hergestellt ist, der jeweils in einem Standardgehäuse eingeschlossen ist.

**Claims**

1. Arbitration system for access requests from a plurality of processors (1, 2) on communal resources (3) through a common bus (BUS), each processor (1) having an arbitration assembly (3) for conflicts between access requests (DAB), said arbitration assembly (3) comprising treatment means (4, 5) of access requests (DAB) connected to the bus and the processor (1) and an access priority resolution circuit (6), connected to the bus, to the access request treatment means (4, 5) and to the processor (1), said resolution circuit being adapted to attribute to the access requests (DAB), priorities which may be fixed, revolving, or priorities which may simultaneously be fixed and revolving, the access request treatment means comprising a circuit (4) for access requests to the bus receiving a signal (DAB) indicating an access request to the processor corresponding to the arbitration assembly under consideration, as well as a signal (BREQ) indicating if other processors have made an access request, and a transmission circuit (5) providing a signal (DBA) indicating the verdict of arbitration on the access request to the corresponding processor (1), as a function of other access requests, said request circuits (4) and verdict transmission circuits (5) being connected to the bus, to the processor (1) and to the priority resolution circuit (6), the arbitration verdict transmission circuit (5) comprising means to recognise whether the arbitration assembly (3) indicated to have priority over the bus corresponds to a processor (1) providing an access request signal (DAB) and to send said processor a signal (DBA) indicating acceptance of said request, each arbitration assembly (3) additionally comprising an interface (9) connecting the processor (1) and the arbitration verdict transmission circuit (5) with the bus, characterized in that the priority resolution circuit (6) for each arbitration assembly (3) additionally comprises a priority resolution assembly (28) which includes a fixed priority encoder (30) to encode the access requests of arbitration assemblies which operate with fixed priority, and a revolving priority encoder to encode the priorities of arbitration assemblies functioning with revolving priority, said revolving priority encoder comprising at least one fixed priority encoder (32) preceded by a circular mixing network (33) for access requests, and followed by an adder (34) for adding the value +1 to the number (UC0, UC1, UC2) of the processor demanding access to the bus, the inputs of the fixed priority encoder and the revolving priority encoder being connected to the outputs of a logic circuit (37) to switch the arbitration demands which operate with fixed priority and the demands from arbitration assemblies which operate with revolving priority respectively towards the fixed priority and revolving priority encoders, each priority resolution circuit (6) comprising means to supply to priority resolution circuits of the other arbitration assemblies, the signals (BM1, BM2, BM3, BM4) designating the arbitration assembly which will be active for the next demand for access to the bus.

2. Arbitration assembly according to Claim 1, characterized in that it additionally comprises supervision means (7) connected to the priority resolution circuits (6) through the bus, to supply said circuits with a signal (BNA) for command of change of arbitration assembly if an arbitration verdict is not provided within a predetermined period.

3. Arbitration assembly according to Claim 1, characterized in that the supervision means (7) comprise delay means (10) whose input is connected to the bus to receive signals (BREQ) indi-

21
0 076 196
22

cating whether other processors have made an access request, an output of said delay means providing the command signal for change of arbitration assembly (BNA) to the priority resolution circuits if an arbitration verdict is not provided within a predetermined period.

4. Arbitration assembly according to either of claims 2 and 3, characterized in that each arbitration assembly is provided in the form of an integrated circuit on a substrate, enclosed in a standard casing.

# FIG.1

# FIG.3

FIG.2

0 076 196

FIG.4

17

# FIG.5

# FIG.6

de 27
(FIG.4)

FIX φ à 7̄

FIX̄φ
FIX̄7

ROT̄ φ à 7̄
ROT̄φ
ROT̄7

MSKφ

MSK7

MSKφ à
MSK7

Pφ
P1      P2

UCφ
UC1   UC2

de 50
(FIG.4)

UCφ
UC1   UC2

+1

BM1
BM2
BM3
BM̄4

0 076 196

0 076 196

# FIG.7

46

32

vers 34
(Fig.6)

ROT7    ROT6    ROT5    ROT4    ROT3    ROT2    ROT1    ROT ∅

45

UC∅    UC1    UC2

23